Europäisches Patentamt

European Patent Office

Office européen des brevets

(11) Publication number: **0 366 166**
**A2**

# (12) EUROPEAN PATENT APPLICATION

(21) Application number: **89202339.1**

(22) Date of filing: **18.09.89**

(51) Int. Cl.5: **G08B 29/00 , B60R 25/00 , G08B 13/16**

(30) Priority: **27.10.88 IT 4689088**

(43) Date of publication of application:
**02.05.90 Bulletin 90/18**

(84) Designated Contracting States:
**AT BE CH DE ES FR GB GR IT LI LU NL SE**

(71) Applicant: **MED di REGGIANI MEDARDO**
**Via Raffaello, 33/A**
**I-42100 Reggio Emilia(IT)**

(72) Inventor: **Reggiani, Medardo**
**Via Raffaello, 33/A**
**I-4210 Reggio Emilia(IT)**

(74) Representative: **Corradini, Corrado**
**Studio Ing. C. CORRADINI & C. S.r.l. 4, Via**
**Dante Alighieri**
**I-42100 Reggio Emilia(IT)**

(54) Method and device for detecting abnormal situations in ultrasonic antitheft systems particularly for motor vehicles.

(57) A method for detecting abnormal situations in ultrasonic antitheft systems in which an emitter transducer generates ultrasound the return signals of which are received by a receiver transducer consists of interrupting the ultrasound emission at predetermined intervals for a predetermined period, and emitting an ultrasonic pulse of duration less than said predetermined period. The response or return signal from said pulse is received and analyzed, after which a signal is emitted for the purpose of restoring normal ultrasound emission if the value of said response signal is other than zero, or a signal for the purpose of activating an alarm device if the value of said response signal is zero.

FIG. 1

EP 0 366 166 A2

# METHOD AND DEVICE FOR DETECTING ABNORMAL SITUATIONS IN ULTRASONIC ANTITHEFT SYSTEMS PARTICULARLY FOR MOTOR VEHICLES

This invention relates generally to ultrasonic antitheft systems, particularly for motor vehicles in general.

More particularly, the invention relates to a method for detecting abnormal situations in the operation of such ultrasonic antitheft systems.

Such ultrasonic antitheft systems are known to comprise a central control unit with two transducers, of which one emits ultrasound and the other receives the return signals therefrom.

The operation, and thus the activation, of the alarm device of these antitheft systems is based on differences between the frequency of the received ultrasound and the frequency of that transmitted, this frequency difference being caused by objects moving within the space being monitored by virtue of the known Doppler effect.

However, ultrasonic antitheft systems of known type remain inactive, ie do not emit any indication or alarm signal, when the receiver transducer receives no signal.

This can for example be due to the masking (covering) of one of the transducers of the antitheft system (to which access can be gained for example by removing the windscreen), or to the disconnection of the cables which connect the transducers to their control circuit.

In such situations said antitheft systems are substantially ineffective.

Many attempts have been made to remedy the ineffectiveness of antitheft devices when the receiver or transmitter transducer is masked and the arriving signal therefore disappears.

In a first known system an amplitude sensor combined with a minimum signal threshold is associated with the control circuit of the antitheft device. In this manner, when the arriving signal has a value less than the threshold, the antitheft device emits a warning because the situation which it detects is due to masking of at least one transistor.

It is apparent that such a system is of modest reliability and is inconvenient from the practical aspect.

This is because minimum signal situations can arise due to factors other than the masking of a transducer or to the cutting of the electric cables, with the result that the antitheft system operates in error.

In this respect it can happen, and has in fact happened, that the transducer input receives signals which are in phase opposition or merely out of phase, and thus with a resultant amplitude which is zero or less than the threshold value.

Said situation can also occur under apparently stationary conditions, for example following slow temperature variations within the environment through which the ultrasound propagates.

Said known system has also proved inconvenient because of the need to establish a specific threshold value for each vehicle type and model, which threshold value can be different even for two identical vehicle models which differ only in their internal fittings.

In another known system, which also attempts to detect the possible disappearance of the signal directed towards the receiver transducer, with each tranducer there is associated at least one further cable, preferably located within the same sheath containing the cables which connect the transducer to the control circuit.

If the group of cables is tampered with, an appropriate circuit detects the interruption of said at least one further cable, with simultaneous operation of the antitheft device.

This system has proved however to be of relatively poor reliability because of the ease with which the at least one additional cable can be identified, allowing the remaining ones to be cut.

The main object of the present invention is to provide an antitheft device which is automatically protected even against abnormal operating situations, and in which the aforesaid problems relating to the previously discussed detection systems are totally overcome.

Said object is attained in that the device in question also comprises investigation and detection means which are of active type, in the sense that it investigates or monitors whether abnormal situations have or have not occurred within its range of action, such as inactivation of the receiver transducer, these being combined with known means which operate passively in that they wait for a determined event to occur before emitting an alarm signal.

The method of operation of the investigation and detection means of active type is based on the fact that the response signal to a pulse generated by an emitter transducer is presented to a receiver tranducer with a value (and a duration) always other than zero. Consequently, if in an ultrasonic antitheft device the usual ultrasound emission is temporarily interrupted and a pulse of predetermined value (and duration) is emitted, the response or return signal from said pulse will reach the receiver transducer with a certain delay, the subsequent analysis of said response then establishing its value.

According to the invention, any value of the response signal which is other than zero results substantially in corresponding regular operation of the antitheft device, whereas the lack of reception of any response signal can signify either the masking of at least one transducer or the cutting of the cables which connect it to the control circuit. In the case of no response, a signal is produced which activates the alarm of the antitheft device, whereas in the opposite case normal ultrasound transmission is restored.

The pulse emission can occur with either regular or irregular frequency, the time of analysis of the response signal to each individual pulse being at least equal to the time which this latter takes to reach the most distant object in the passager compartment and reach the receiver transducer after reflection.

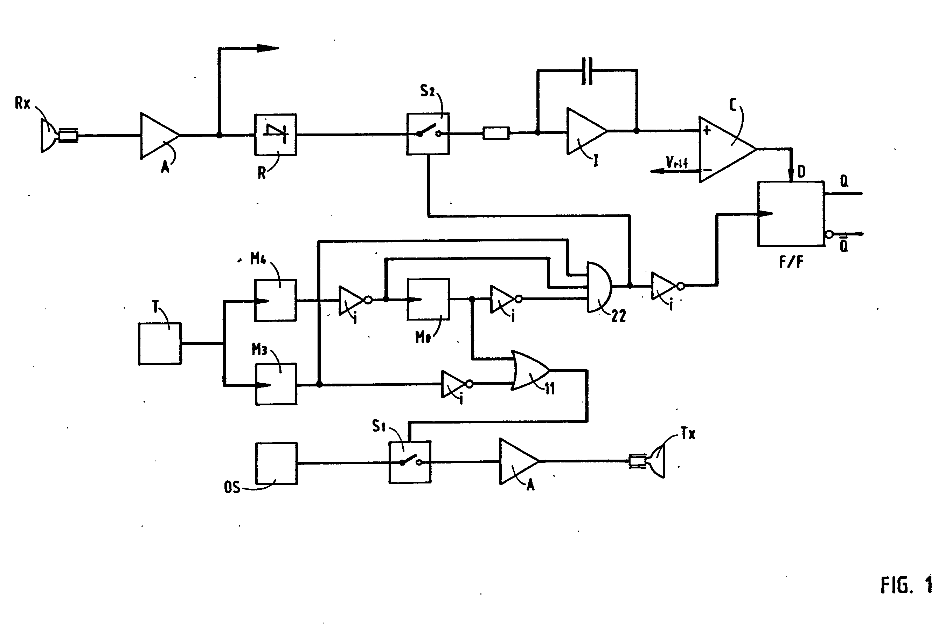

The invention will be apparent from the detailed description given hereinafter with reference to Figure 1, which shows a block diagram of a circuit for implementing the method of the invention.

It should firstly be noted that the illustrated circuit, which is suitably connected to the central control unit of a normal ultrasonic antitheft device, is shown purely by way of example as the method according to the invention can be implemented by other equivalent circuits, for example by a microprocessor provided with suitable software.

Said figure, easily understood by an expert of the art, shows an emitter transducer and a receiver transducer, indicated by Tx and Rx respectively, with which respective amplifiers A are associated. The ultrasound pulses are generated at a convenient frequency by an oscillator OS. With this latter there is associated a switch $S_1$, which closes the circuit when the value of the output signal of an OR logic circuit 11 is high. A further switch $S_2$ is located downstream of the receiver transducer Rx by way of an amplitude measuring circuit R. The switches $S_1$ and $S_2$ are solid state switches which close the circuit when activated by a high logic circuit.

In addition, between said switch $S_2$ and the input D of a type D flip-flop circuit FF there are provided an integrator circuit I and a voltage comparator C, the output signal of which becomes high when the input signal exceeds the reference (voltage) signal.

There are also provided an AND logic circuit 22 and an OR logic circuit 11 which are connected as illustrated to three monostable multivibrators, $M_0$, $M_3$ and $M_4$ respectively. Downstream of these latter there are provided respective logic signal inverters i, the multivibrators being connected to a square wave oscillator T.

This latter is arranged to establish the repetition period $T_R$ as described hereinafter.

When the antitheft device is switched on, according to the invention the normal ultrasonic emission is interrupted at regular intervals under the control of the oscillator T. Said interruption takes place at intervals of $T_R$, for example of the order of 2 seconds.

After this the multivibrators $M_3$, $M_4$ and $M_0$ generate pulses of duration $T_3$, $T_4$ and $T_0$ respectively, where $T_3 > T_4 > T_0$.

Obviously $T_R > T_3$, $T_3$ being the duration of the period for which the normal ultrasound emission is interrupted. For example said pulses have durations $T_3$, $T_4$ and $T_0$ of 150 ms, 50 ms and 1 ms respectively. What is important is that the period $T_2$, given by the relationship $T_2 = T_3 - (T_4 + T_0)$, is at least equal to, and preferably slightly greater than, the time which an ultrasound pulse emitted during the period $T_0$ takes to reach the most distant obstacle in the passager compartment and to return to the transducer Rx. The response signal to said pulse of duration $T_0$ is received and analyzed by the circuit I and by the comparator C.

If the value of the integral of the response signal at the end of the time $T_2$ is greater than the reference value of the comparator C, its output signal will have a high value and the output signal Q of the circuit FF will also correspondingly remain high, indicating normal operation.

Normal ultrasound emission will thus be restored at the end of the period $T_3$. If in contrast the integral of the response signal to the pulse of duration $T_0$ has a value less than the threshold value, the output Q of the circuit FF assumes the low state, resulting in activation of the alarm of the antitheft device.

It is apparent that lack of reception of the response signal to the pulse of duration $T_0$ results from an abnormal situation, for example due to masking of at least one transducer Rx or Tx, or to the cutting of its electrical connections.

The invention is susceptible to modifications which lie within the following claims.

**Claims**

1. A method for detecting abnormal situations in ultrasonic antitheft systems in which an emitter transducer generates ultrasound, the return signals of which, after reflection by obstacles, are received by a receiver transducer, characterised by:
- interrupting the ultrasound emission at intervals $T_R$ for a period $T_3 < T_R$;
- emitting an ultrasonic pulse of duration $T_0$ with a delay of $T_4$ with respect to the period $T_3$;
- receiving and analyzing the response signal to said ultrasonic pulse during a period $T_2$, equal to $T_3 - (T_4 + T_0)$, which has a duration at least equal to the time taken for said ultrasonic pulse to reach the most distant obstacle and to return to the receiver transducer; and then
- emitting on termination of said period $T_3$ a signal for the purpose of restoring regular ultrasound emission if the value of said response signal is other than zero, or a signal for the purpose of activating an alarm device if the value of said response signal is less than a threshold value.

2. A device for implementing the method claimed in claim 1, characterised by comprising means for cyclically interrupting the main ultrasound emission of the antitheft system for a predetermined time interval, means for emitting secondary ultrasound during said time interval, and means for receiving this latter ultrasound, said means feeding signals to a control circuit which operates the alarm siren if no secondary ultrasound is received.

FIG. 1